# EUROPÄISCHE PATENTSCHRIFT

(11) **EP 0 796 384 B1**
(45) Veröffentlichungstag und Bekanntmachung des Hinweises auf die Patenterteilung: **04.07.2001**
(21) Anmeldenummer: 96938005.4
(22) Anmeldetag: 10.09.1996
(51) Int. Cl.: E21B 7/14

(54) **VERFAHREN UND VORRICHTUNG ZUR HERSTELLUNG VON BOHRLÖCHERN**
DRILLING PROCESS AND DEVICE
PROCEDE DE FORAGE ET DISPOSITIF ASSOCIE

(30) Priorität: 12.09.1995 DE 19533765
(43) Veröffentlichungstag der Anmeldung: 24.09.1997
(73) Patentinhaber: Kunkel, Klaus, D-40477 Düsseldorf (DE)
(72) Erfinder: PLICHTA, Peter, D-40225 Düsseldorf (DE)
(74) Vertreter: Patentanwälte Hauck, Graalfs, Wehnert, Döring, Siemons
(86) Internationale Anmeldenummer: DE9601693
(87) Internationale Veröffentlichungsnummer: WO9710410

(56) Entgegenhaltungen:
- DE-A- 2 153 954
- DE-B- 1 115 203
- OIL AND GAS JOURNAL, Bd. 54, Nr. 14, 8.August 1955, TULSA, OKL., USA, Seite 67 XP002023135 MCGHEE: "New down-hole tool"
- JOURNAL OF PETROLEUM TECHNOLOGY, April 1960, Seiten 61-74, XP000614501 LEDGERWOOD: "Efforts to develop improved oilwell drilling methods"

## Beschreibung

Die vorliegende Erfindung betrifft ein Verfahren zur Herstellung von Bohrlöchern in hartem Gestein, wie Granit, sowie eine Vorrichtung zur Durchführung dieses Verfahrens.

Es ist bereits ein chemisches Verfahren bekannt (siehe DE-A-21 53 954), mit welchem Gestein chemisch geschnitten bzw. seine Oberfläche bearbeitet werden kann. Hierbei wird einem Brenner vom Typ eines Daniellschen Hahns Wasserstoff und Fluor zugeführt. Der dabei entstehende Fluorwasserstoff besitzt eine Temperatur von etwa 4000 °C und spaltet die vorhandenen Siliziumsauerstoffbindung und Aluminiumsauerstoffbindung des Gesteins auf, so daß eine reine Schnittstelle entsteht. Dieses Verfahren, mit Fluorwasserstoff alle Bestandteile von Gesteinen in gasförmige Fluoride und H₂O-Dampf zu verwandeln, hat nichts mit einem Verfahren zu tun, bei dem feste Reaktionsprodukte weggeblasen werden, wie dies zum Beispiel beim Bearbeiten von Gestein mit einer Sauerstofflanze der Fall ist.

In der oben genannten Patentschrift ist ferner noch erwähnt, daß der entstehende Fluorwasserstoff giftig ist und nach dem Prinzip des Staubsaugers in die Atmosphäre verblasen wird. Fernerhin wird die Möglichkeit angeschnitten, die Flurwasserstoffflamme unter Wasser einzusetzen, was jedoch zur Ausbildung von sehr giftiger Flußsäure führt.

Aus OIL AND GAS JOURNAL , Vol. 54, Nr. 14, 8. August 1955, Tulsa, Okl., USA, Seite 67, McGhee: "New down - hole tool" sowie JOURNAL OF PETROLEUM TECHNOLOGY, April 1960 Seiten 61 - 74, LEDGERWOOD" Efforts to develop improved oilwell drilling methods", § "chemical rock attack" S. 69 - 70 ist ein Verfahren zur Herstellung von Bohrlöchern in hartem Gestein bekannt, bei dem von Halogenfluoriden Gebrauch gemacht wird.

Aus der DE-A-21 53 954 ist die Verwendung von Fluor und Wasserstoff und/oder Kohlenwasserstoffen in gasförmigem Zustand zur Zersetzung, insbesondere zum Schneiden, Sägen und zur Oberflächenbearbeitung, von Gestein und anderem im wesentlichen aus Kieselsäure bestehenden mineralischen Gut bekannt. Diese Veröffentlichung beschreibt kein Bohrverfahren mit wässriger Flüssigkeit zur Absaugung der Reaktionsprodukte.

Aus der DE-B-1 115 203 ist ein Strahldüsenbohrer für harte Mineralschichten mit einem hängenden , sich im Bohrloch nicht drehenden, einen Brennerkopf aufweisenden Blasrohr bekannt, bei dem der Brennerkopf rotierbar im Blasrohr angeordnet und mit einem im Blasrohr untergebrachten Drehantrieb versehen ist. Bei dem hier angewendeten Bohrverfahren wird mit Kerosin und Sauerstoff gearbeitet.

Unter Berücksichtigung des genannten Standes der Technik ist es die Aufgabe der vorliegenden Erfindung, ein Verfahren zur Herstellung von Bohrlöchern, insbesondere zur Prospektion und/oder Förderung von Erdöl, zu schaffen, welches mit relativ niedrigen Kosten und unter Vermeidung von giftigen und/oder korrosiven Reaktionsprodukten in sehr einfacher Weise durchführbar ist.

Erfindungsgemäß wird diese Aufgabe durch ein Verfahren mit den Merkmalen des Patentanspruchs 1 gelöst.

Vorteilhafte Weiterbildungen des erfindungsgemäßen Verfahrens ergeben sich anhand der Unteransprüche 2 und 3.

Aufbauend auf der DE-A-21 53 954 besteht der Kern der vorliegenden Erfindung darin, daß im Bereich der durch die Zusammenführung von Wasserstoffgas und Fluorgas gebildeten Flamme eine Lauge, vorzugsweise in Form einer Natriumhydroxid-Lösung (Natronlauge), vorgesehen ist, in welcher die durch die Umsetzung mit Fluorwasserstoff gebildeten, stark toxischen Gase chemisch gebunden werden. Dabei handelt es sich in der Hauptsache um die Fluoride des Siliziums, Aluminiums und Kaliums. Andere im Erdgestein vorkommende Metallionen, wie Natrium, Magnesium, Eisen, Calcium usw., werden dabei ebenfalls in Fluoride umgewandelt. Durch Einwirkung von heißem Fluorwasserstoff zerfallen eventuell vorhandene Karbonate ebenfalls in gasförmige Bestandteile. Alle gebildeten Fluoride und der überschüssige Fluorwasserstoff sowie eventuell gebildetes Kohlendioxid werden auf diese Weise von der bis in den unteren Bereich des herzustellenden Bohrloches eingeleiteten Lauge in eine konzentrierte Salzlösung umgewandelt, welche aus dem hergestellten Bohrloch abgesaugt werden kann. Unter Einsatz entsprechender pH-Meßfühler kann dabei die Zufuhr von frischer Lauge derart gesteuert werden, daß die abgepumpte Salzlösung jeweils eine gleichbleibende Konzentration aufweist.

Diese konzentrierte Salzlösung kann in der Folge mit Calciumhydroxid umgesetzt werden. Dabei bildet sich das schwer lösliche Calciumfluorid, welches durch Filterpressen abgetrennt werden kann. Da Calciumfluorid ein Ausgangsprodukt zur Fluorgewinnung ist, kann dieses im Rahmen einer Fluor-Recyclierung unter Einsatz von elektrischer Energie aufgearbeitet werden.

Eine Vorrichtung zur Durchführung des erfindungsgemäßen Verfahrens ergibt sich anhand der Merkmale des Anspruchs 4.

Die Erfindung soll nunmehr anhand eines Ausführungsbeispiels näher erläutert und beschrieben werden, wobei auf die beigefügte Zeichnung verwiesen ist. Es zeigen:
- Figur 1: eine schematische vertikale Schnittansicht eines Bohrlochs, welches mit dem erfindungsgemäßen Verfahren hergestellt ist; und
- Figur 2: eine horizontale Schnittansicht entlang der Linie II-II von Figur 1.

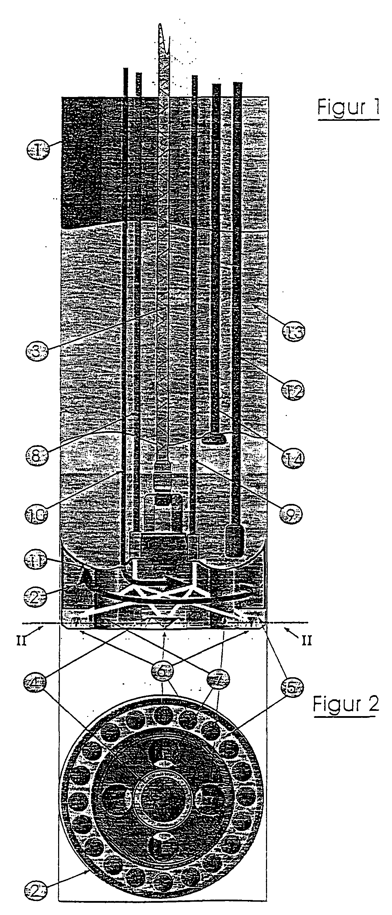

Wenn innerhalb des Erdbodens beispielsweise zur Erdölprospektion ein Bohrloch eingebracht werden soll, muß mit herkömmlichen (z.B. hydraulischen) Bohrverfahren zuerst ein Loch durch das Erdreich bis zur Erreichung des Grundgesteins gebohrt werden. Dieses Loch wird dann gemäß Figur 1 mit Hilfe eines Stahl- oder Stahlbetonmantels 1 gesichert. In der Folge wird durch das auf diese Weise hergestellte Bohrloch ein gemäß der Erfindung ausgebildeter Bohrkopf 2 an einem Stahlseil 3 heruntergelassen. Dieser Bohrkopf 2 besitzt dabei einen mittleren Brenner 4 sowie einen äußeren ringförmigen Brennerkranz 5, durch dessen Düsen 6 Wasserstoffgas und Fluorgas zugeführt werden. Durch Selbstzündung entstehen in etwa 4000 °C heiße Fluorwasserstoffgasflammen, mit denen das Gesteinsmaterial durch chemische Reaktion mit dem erzeugten Fluorwasserstoff abgetragen wird. Der Bohrkopf 2 besitzt zwischen den Brennern 4 und 5 einen Kranz von Öffnungen 7, durch welche die entstandenen gasförmigen Fluoride, Wasserdampf, überschüssiger Fluorwasserstoff sowie eventuell gebildetes Kohlendioxid unter Druck entweichen können. Der unterhalb des Bohrkopfes 2 im Bereich der Reaktionsflamme herrschende Druck bewirkt, daß der Bohrkopf 2 auf einem Gaspolster aufliegt. An dem Bohrkopf 2 sind eine Mehrzahl von Rohrleitungen bzw. Schläuche 8 bis 10 angeschlossen, durch welche die Zufuhr des Wasserstoffgases 8 und des Fluorgases 9 sowie die Zuleitung von Kühlwasser 10 für die Brenner 4, 5 erfolgt. Wegen der enormen Hitze müssen dabei der Bohrkopf 2, die Brenner 4, 5 und insbesondere die Öffnungen 7 permanent gekühlt werden. Das Kühlwasser verläßt über die Ausgänge 11 den Bohrkopf 2.

Entlang des Stahlseiles 3 ist schließlich noch eine Rohrleitung 12 bis in den Bereich oberhalb des Bohrkopfes 2 geführt, durch welche die Zufuhr frischer Natriumhydroxid-Lösung (Natronlauge) erfolgt. Oberhalb des Bohrkopfes 2 befindet sich eine meterhohe Flüssigkeitssäule 13, deren Gewicht auf dem Bohrkopf 2 lastet. Eine weitere Rohrleitung 14 endet in einem variablen Abstand von der Zuleitung 12, um die entstandene Salzlösung abzupumpen.

Sobald die Brenner 4, 5 des Bohrkopfes 2 aktiviert worden sind, entstehen im Bereich der Bohrstelle große Mengen von giftigen und gasförmigen Fluoriden, vor allem Silizium-, Kalium- und Aluminiumfluoride, wobei zusätzlich überschüssiger Fluorwasserstoff und Wasserdampf frei wird. Die sehr heißen Gase gelangen durch die Öffnungen 7 in den Bereich der sich oberhalb des Bohrkopfes 2 befindlichen Flüssigkeitssäule 13. Durch Zuleitung von Natronlauge reagieren das Siliziumfluorid, das Aluminiumfluorid und der überschüssige Fluorwasserstoff zu wasserlöslichen Silikaten, Aluminaten und Alkalifluoriden. Die über den Bohrkopf 2 eingeleitete Natronlauge wird auf diese Weise in eine konzentrierte Salzlösung umgewandelt. pH-Meßfühler steuern den kontinuierlichen Zulauf der Natronlauge und ebenso das Abpumpen der heißen Salzlösung.

Durch die Salzbildung wird Wärme frei. Gleichzeitig geben die sehr heißen Gase ihre Energie im Bereich der Zuführung der Natronlauge ab. Es kann also nicht verhindert werden, daß die Natronlauge zu kochen beginnt, und ebenso die darüber befindliche Flüssigkeitssäule bzw. Wassersäule 13. Durch das Verdampfen wird dem System jedoch sehr viel Wärme entzogen, so daß lediglich eine gewisse Menge von verdampftem Wasser ersetzt werden muß.

Im Rahmen der Erfindung wird die aus dem Bohrloch abgesaugte konzentrierte Salzlösung in entsprechenden Behältern aufgefangen und mit Calciumoxid bzw. Calciumhydroxid umgesetzt. Das dabei ausgefällte Calciumfluorid kann gesammelt werden, um auf diese Weise in einer Fluorfabrik eine Wiedergewinnung des innerhalb der konzentrierten Salzlösung chemisch gebundenen Fluors vornehmen zu können. Da innerhalb eines aus festem Gestein bestehenden Bohrloches praktisch überhaupt keine Verluste an Fluorverbindungen auftreten, kann somit eine im wesentlichen vollkommene Fluor-Rezirkulierung vorgenommen werden, so daß bei der Durchführung des erfindungsgemäßen Verfahrens allein ein gewisser Verbrauch an Energie, Wasserstoff und Wasser entsteht.

Anstelle von Natronlauge kann das erfindungsgemäße Verfahren ebenfalls mit anderen Laugen, beispielsweise Kali- oder Kalklauge (Calciumhydroxid), durchgeführt werden. Beim letzteren Verfahren entsteht direkt Calciumfluorid, welches als Aufschlämmung abgesaugt werden kann.

Da für die Durchführung des erfindungsgemäßen Verfahrens kein Bohrgestänge erforderlich ist, entlang welchem größere Drehmomente übertragen werden müssen, und da zudem der im Rahmen der Erfindung zu verwendende Bohrkopf 2 auch mit sehr geringem Durchmesser gebaut werden kann, eignet sich das erfindungsgemäße Verfahren insbesondere zur Erstellung von sehr tiefen Probebohrungen in festem Gestein, wodurch die sich ergebenden Kosten bei der Erdölprospektion entsprechend verringert werden können. Um den Durchmesser so klein wie möglich zu halten, kann es sich als zweckmäßig erweisen, wenn die in das Bohrloch eingeleitete Natronlauge gleichzeitig zur Kühlung des Bohrkopfes 2 herangezogen wird.

Falls eine Probebohrung fündig wird, kann das Bohrloch mit einem entsprechend breiten Fluorwasserstoffbrenner erweitert werden.

## Patentansprüche

1. Verfahren zur Herstellung von Bohrlöchern in hartem Gestein, wie Granit, indem das zu bohrende Gestein einer durch Zusammenführung von Wasserstoffgas und Fluorgas gebildeten Flamme ausgesetzt wird und indem die durch die Flamme gebildeten Reaktionsprodukte mit Hilfe einer wäßrigen Flüssigkeit aus dem bereits hergestellten Bohrloch zur Absaugung gelangen, wobei als die zur Entfernung der gebildeten Reaktionsprodukte dienende wäßrige Flüssigkeit eine Lauge, vorzugsweise Natriumhydroxid - Lösung ( Natronlauge ) verwendet wird, in welcher der bei der Verbrennung von Wasserstoff und Fluor gebildete, überschüssige Fluorwasserstoff in ein ungiftiges Fluorid , wie Natriumfluorid, umgewandelt wird, während gleichzeitig die anderen gasförmigen Reaktionsprodukte in wasserlösliche Silikate , Aluminate und Alkalifluoride umgewandelt werden.

2. Verfahren nach Anspruch 1, dadurch gekennzeichnet, daß die aus dem Bohrloch abgesaugte konzentrierte Salzlösung aufgefangen wird und aus dieser Salzlösung die Fluoride durch Zugabe von Calciumoxid bzw. Calciumhydroxid als Calciumfluoride gefällt werden und im Rahmen einer Fluor-Rezirkulierung unter Einsatz von elektrischer Energie das Fluorgas wiedergewonnen wird.

3. Verfahren nach Anspruch 1 oder 2, dadurch gekennzeichnet, daß die Zufuhr von frischer Lauge in das Bohrloch und das Absaugen der Salzlösung in Abhängigkeit der Ausgangssignale von im Bereich der Zuführung und der Absaugstelle vorgesehenen pH - Meßfühlern gesteuert wird.

4. Vorrichtung zur Durchführung des Verfahrens nach einem der Ansprüche 1 bis 3 mit einem Bohrgerät, das im wesentlichen aus einem an einem Stahlseil ( 3 ) hängenden Bohrkopf ( 2 ) besteht, welcher mit einem zentralen Brenner ( 4 ) und einem ringförmigen Brennerkranz ( 5 ) und entsprechenden Austrittslöchern ( 7 ) versehen und an entsprechende Rohrleitungen ( 9 bis 13 ) angeschlossen ist, durch welche dem Bohrkopf ( 2 ) Wasserstoffgas, Fluorgas, Lauge und Kühlwasser zugeführt wird.

## Claims

1. A process for producing drilled holes in hard rock, for instance granite, by exposing the rock to be drilled to a flame formed by combining hydrogen gas and fluorine gas and by drawing off the reaction products formed by the flame from the already produced drilled hole by means of an aqueous liquid, wherein a lye, preferably sodium hydroxide solution (soda lye), is used as the aqueous liquid serving for removing the formed reaction products, in which the excess hydrogen fluoride formed during the combustion of hydrogen and fluorine is converted into a non-toxic fluoride, as sodium fluoride, while simultaneously the other gaseous reaction products are converted into watersoluble silicates, aluminates and alcaline fluorides.

2. The process according to claim 1, characterized in that the concentrated salt solution drawn off from the drilled hole is collected and the fluorides are precipitated as calcium fluorides from this salt solution by the addition of calcium oxide or calcium hydroxide and the fluorine gas is recovered during a fluorine recirculation by the use of electrical energy.

3. The process according to claim 1 or 2, characterized in that the supply of fresh lye into the drilled hole and the drawing-off of the salt solution are controlled in response to the output signals of pH probes in supply and withdrawal regions.

4. An apparatus for carrying out the process according to one of the claims 1 to 3 comprising a drilling apparatus consisting essentially of a drilling head (2) suspended from a steel rope (3), said drilling head (2) being provided with a central burner (4) and an annular burner collar (5) and corresponding outlet apertures (7) and being connected to corresponding conduits (9 to 13) through which hydrogen gas, fluorine gas, lye and cooling water are supplied to said drilling head (2).

## Revendications

1. Procédé de réalisation de trous forés dans une pierre dure, par exemple du granit, dans lequel la pierre à forer est exposée à une flamme formée par l'apport simultané d'hydrogène gazeux et de fluor gazeux, et dans lequel les produits de réaction formés par la flamme sont aspirés à l'aide d'un liquide aqueux hors du trou foré déjà réalisé, et comme liquide aqueux servant à enlever les produits de réaction formés, on utilise une lessive alcaline, de préférence une solution d'hydroxyde de sodium (lessive sodique) dans laquelle le fluorure d'hydrogène en excès formé lors de la combustion de l'hydrogène et du fluor est converti en un fluorure non toxique, comme le fluorure de sodium, tandis qu'en même temps les autres produits gazeux de réaction sont convertis en silicates, aluminates et fluorures d'alcalis solubles dans l'eau.

2. Procédé selon la revendication 1, caractérisé en ce que la solution saline concentrée aspirée hors du trou foré est recueillie, les fluorures sont précipités hors de cette solution saline sous la forme de fluorures de calcium par addition d'oxyde de calcium ou d'hydroxyde de calcium, et le fluor gazeux est récupéré dans le cadre d'une recirculation du fluor qui recourt à l'énergie électrique.

3. Procédé selon la revendication 1 ou 2, caractérisé en ce que l'apport de lessive alcaline fraîche dans le trou foré et l'aspiration de la solution saline sont asservis aux signaux de sortie de sondes de mesure du pH prévues dans la zone de l'apport et dans celle du point d'aspiration.

4. Dispositif en vue de la mise en oeuvre du procédé selon l'une des revendications 1 à 3, comportant un appareil de forage qui est essentiellement constitué d'une tète de forage (2) suspendue à un câble d'acier (3), dotée d'un brûleur central (4), d'une couronne annulaire de brûleur (5) et de trous de sortie (7) appropriés, et raccordée à des conduits tubulaires (9 à 13) correspondants par lesquels l'hydrogène gazeux, le fluor gazeux, la lessive alcaline et de l'eau de refroidissement sont apportés à la tête de forage (2).
